# EUROPÄISCHE PATENTANMELDUNG

(11) **EP 1 498 176 A1**
(43) Veröffentlichungstag der Anmeldung: **19.01.2005**
(21) Anmeldenummer: 03102194.2
(22) Anmeldetag: 16.07.2003
(51) Int. Cl.: B01J 21/06, B01J 35/00, B01J 37/025, B01J 37/34

(54) **Photokatalytisch aktive Beschichtung eines Substrats**

(71) Anmelder: Profine GmbH, 53840 Troisdorf (DE)
(72) Erfinder: Sepeur, Stefan, Dr., 66787 Wadgasssen (DE); Krechan, Reimund, 66646 Alsweiler (DE); Gross, Frank, Dr., 66386 St. Ingbert (DE); Frings, Wolfgang, Dr., 53842 Troisdorf (DE); Weyer, Christoph, 66802 Überherrn (DE)
(74) Vertreter: Kisters, Michael Marcus

(57) **Zusammenfassung**

Die Erfindung betrifft eine photokatalytisch aktive Beschichtung eines Substrats, aufgebaut aus einer Schutzschicht und hierauf aufgebrachten photokatalytisch aktiven Partikeln, wobei die Schutzschicht keine photokatalytische Aktivität aufweist. Die Schutzschicht enthält bevorzugt ZrO₂ und SiO₂.

## Beschreibung

Die Erfindung betrifft eine photokatalytisch aktive Beschichtung eines Substrats, aufgebaut aus einer Schutzschicht und hierauf aufgebrachten photokatalytisch aktiven Partikeln, wobei die Schutzschicht keine photokatalytische Aktivität aufweist.

### Technisches Gebiet

Der Effekt der Photokatalyse ist lange bekannt und wird insbesondere zur Oxidation von Substraten unter Sonnenlicht oder künstlichem Licht eingesetzt. Die Oxidation kann z.B. in der chemischen Industrie zur gezielten Oxidation von chemischen Verbindungen dienen. Hauptsächlicher Einsatz erfolgt allerdings in der ungerichteten Oxidation von Stickstoffoxiden, Schmutzpartikeln oder von Substanzen mit unangenehmen Geruch.

Ein Nebeneffekt der photokatalytischen Aktivität ist die hohe Hydrophilie einer solchen Oberfläche. Dies führt zu einer starken Benetzung der Oberfläche mit Wasser, so dass Schmutzpartikel sehr leicht, z.B. durch Regenwasser, von einer solchen Oberfläche mit Wasser abgewaschen werden können. Haupteinsatzgebiet von selbstreinigenden Oberflächen sind Glasfenster bzw. Fassadenbauteile aus glasähnlichen Materialien, da die meisten photokatalytisch aktiven Materialien eine ausreichende Transparenz aufweisen.

Photokatalytisch aktive Beschichtungen für den Außenbereich müssen eine ausreichende mechanische und chemische Stabilität aufweisen. Die sollte nicht zu Lasten der Aktivität der Beschichtung erfolgen; diese muss auch bei geringer Sonneneinstrahlung, z.B. im Winter, eine ausreichend hohe Aktivität aufweisen.

Weiterhin ist zu beachten, dass die photokatalytische Aktivität einer Beschichtung nicht nur gegen die gewünschten Substrate, sondern auch gegen das Trägermaterial der Beschichtung wirkt. Im Fall der genannten photokatalytisch aktiven Glasfenster ist dies unerheblich, da anorganische Materialien wie Glas gegenüber Oxidationsreaktionen inert sind.

### Stand der Technik

Zur Herstellung von photokatalytisch aktiven Beschichtungen offenbart z.B. EP 0 630 679 B1 die Calzinierung eines TiO₂-Sols bei höheren Temperaturen. Dies resultiert in einer geschlossenen TiO₂-Schicht mit aufliegenden TiO₂-Partikeln, wobei die so erhaltene photokatalytische Schicht direkt auf dem Träger aufliegt. Eine solche Beschichtung ist für thermolabile und/oder oxidationsempfindliche Trägermaterialien nicht einsetzbar.

In EP 0 911 078 A1 wird die photokatalytisch aktive Schicht auf eine chemisch inerte Unterschicht aufgetragen; die Unterschicht weist allerdings eine poröse Grundstruktur auf. Dies birgt die Gefahr, dass oxidationsempfindliche Trägermaterialien durch die poröse Grundstruktur der Unterschicht von der photokatalytisch aktiven Schicht oxidativ angegriffen werden.

EP 1 074 525 A1 offenbart den Einsatz von N-Typ-Halbleitermaterialien als Ober- und Unterschicht. Hier findet ein Ladungstransfer vom Trägermaterial durch die Unterschicht zur photokatalytisch aktiven Oberschicht statt, d.h. es sind auch hier Zersetzungsprozesse des Trägermaterials zu erwarten.

In EP 0 816 466 A1 ist die Verwendung von TiO₂/SiO₂-Mischungen als photokatalytisch aktive Beschichtung beschrieben. Der SiO₂-Anteil der Mischung soll die photokatalytische Zersetzung des Trägermaterials verhindern, führt jedoch gleichzeitig zu einer Beschichtung, d.h. zur Deaktivierung der photokatalytisch aktiven TiO₂-Partikel.

Analog offenbart EP 1 118 385 A1 die Herstellung eines zweischichtigen Systems mit einer chemisch inerten Unterschicht und einer photokatalytisch aktiven Oberschicht. Die Oberschicht enthält ein Bindermaterial, das wiederum zu einer teilweisen Deaktivierung der photokatalytisch aktiven Partikel führen kann. Weiterhin wird zur Herstellung der Beschichtung ein Calzinierprozess eingesetzt, der bei thermisch labilen Trägermaterialien zu Verformungen oder zu Farbveränderungen des Trägers führen kann.

DE 101 58 433 A1 offenbart die Beschichtung von Substraten mit einer Primerschicht auf die photokatalytisch aktive Titandioxid-Partikel aufgebracht werden. Die Primerschicht soll als Wasserspeicher dienen und weist daher eine gewisse Porosität auf. Der Einsatz einer porösen Primerschicht kann bei oxidationsempfindlichen Substraten wie Kunststoffen zu unerwünschten, durch die photokatalytischen Partikel ausgelösten, Zersetzungserscheinungen führen.

Die in DE 101 58 433 A1 offenbarten Beschichtungen benötigen zur Anbindung an die Substratoberfläche deren physikalischchemische Aktivierung z.B. durch Coronastrahlung. Weiterhin ist für thermisch labile Substrate eine schnelle Abbindung der Schichten bei möglichst niedrigen Temperaturen unabdingbar. So führen bei der Beschichtung von Fensterprofilen aus PVC Temperaturen von über 150 °C zu leichten Deformationen, die aber eine passgenaue Weiterverarbeitung des Profils verhindern. Die in DE 101 58 433 A1 offenbarten Reaktionsbedingungen sind für formgetreue Werkstoffe nur bedingt einsetzbar.

### Aufgabe

Aufgabe der vorliegenden Erfindung war es daher, photokatalytisch aktive Beschichtungen bereit zu stellen, die auch für thermisch labile, bzw. oxidationsempfindliche Trägermaterialien geeignet ist.

### Darstellung der Erfindung

Gegenstand der vorliegenden Erfindung sind photokatalytisch aktive Beschichtungen eines Substrats aus mindestens zwei Schichten mit einer ersten Schicht auf dem Substrat, enthaltend ein oder mehrere Metalloxide der Gruppe SiO₂, ZrO₂, Al₂O₃, Nb₂O₃, Ta₂O₃, CaO und einer zweiten Schicht aus TiO₂-Partikeln dadurch gekennzeichnet, dass die erste Schicht weitgehend keine TiO₂-Partikel enthält und mindestens 5 Gew.% ZrO₂ aufweist.

Die erste Schicht weist bevorzugt keine Poren auf, deckt das Substrat vollständig ab und sorgt so für den Schutz von oxidationsempfindlichen Oberflächen vor der photokatalytisch induzierten Zersetzung. Dies ist insbesondere bei der Beschichtung von Fensterprofilen aus PVC von Vorteil, da diese ebenfalls Titandioxid enthalten. Würde das in der PVC-Masse enthaltene Titandioxid freigelegt, würde eine noch schnellere Zersetzung des Kunststoffs resultieren. Die thermische Aushärtung der Unterschicht kann bei so niedrigen Temperaturen erfolgen, dass geformte Halbzeuge wie Profile keine Verformungen erleiden.

Weiterhin weist die erste Schicht weitgehend keine TiO₂-Partikel auf. Dies bedeutet, dass ausgehend vom Substrat mindestens 85 %, bevorzugt mindestens 90%, ganz bevorzugt mindestens 95% der Schichtdicke der ersten Schicht "praktisch" frei von TiO₂-Partikeln sind, also weniger als 0,5 Gew.% und insbesondere weniger als 0,1 Gew.% TiO₂-Partikel aufweisen. Dieses wird insbesondere durch die erfindungsgemäße Verfahrensweise nach Anspruch 6 erreicht.

Erfindungsgemäße Beschichtungen eignen sich daher insbesondere zur Beschichtung von Substraten aus einem oder mehreren polymeren Materialien und/oder Metallen. Als polymeres Material können z.B. Polyvinylchlorid (PVC), Polypropylen (PP), Polyethylen (PE), Polyacrylate und -metacrylate, wie z.B. Polymethylmetacrylat (PMMA), Polyester, Epoxide, Polyurethane (PU), Polyisocyanate, Polystyrol (PS), Polycarbonat (PC), Kautschuke wie SBR oder ABN, jeweils als Homopolymer, Copolymer oder als Polymerblend verwendet werden.

Die Substrate können bereits zu Halbzeugen, ggf. mit komplexen geometrischen Formen wie z.B. extrudierte Profile geformt sein.

### Kurze Beschreibung der Zeichnung

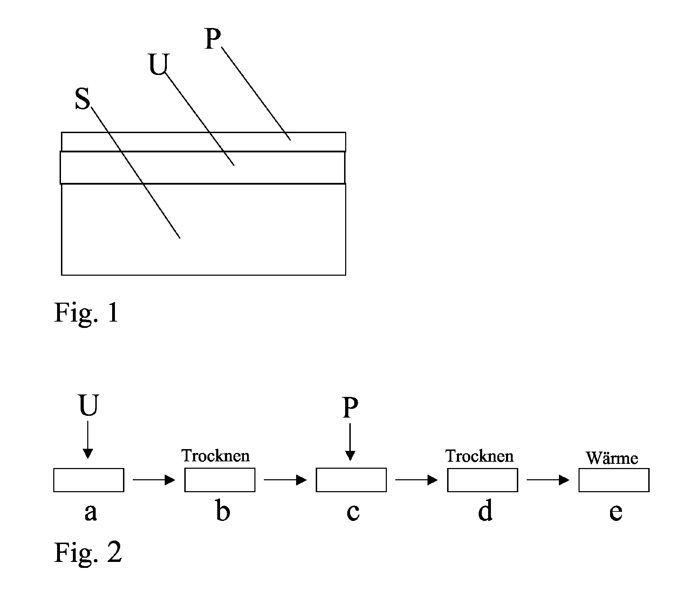

Figur 1 zeigt den schematischen Aufbau einer erfindungsgemäßen Beschichtung, wobei S für Substrat, U für chemisch inerte Unterschicht aus den Metalloxiden und P für die photokatalytisch aktive Schicht aus TiO₂-Partikeln steht.

Die Dicke der ersten Schicht (U in Fig. 1, Unterschicht) beträgt in trockenem, vernetztem Zustand bevorzugt 100 - 500 nm, besonders bevorzugt 200 - 500 und insbesondere 300 - 500 nm.

Die Dicke der zweiten, photokatalytisch aktiven Schicht beträgt in trockenem, vernetztem Zustand bevorzugt 20 - 100, besonders bevorzugt 20 - 50 nm.

Als Unterschicht haben sich Mischungen, die SiO₂ und ZrO₂ im Gewichtsverhältnis 50:50 bis 95:5, insbesondere 75:25 bis 90:10 bzw. 85:15 bis 90:10 enthalten, bewährt. Solche Schichten können optional noch 0,01 bis 2 Gew.% (bezogen auf die Unterschicht) mindestens eines weiteren Metalloxids wie beispielsweise Al₂O₃, Nb₂O₃, Ta₂O₃ oder CaO enthalten.

Die TiO₂-Partikel der photokatalytisch aktiven Oberschicht weisen bevorzugt einen Durchmesser von 5 - 10 nm auf; die Verwendung von Partikeln der Anatas-Modifikation ist gegenüber solchen der Rutil-Struktur zu empfehlen.

Die photokatalytische Aktivität der TiO₂-Partikel kann durch den Beschichtungsprozess reduziert sein. Zur Re-Aktivierung der Aktivität können die Substrate für 1 - 5 Stunden dem Sonnenlicht oder einer entsprechenden künstlichen UV-Bestrahlung ausgesetzt werden.

Weiterer Gegenstand der vorliegenden Erfindung ist ein Verfahren zur Herstellung von photokatalytisch aktiven Beschichtungen auf einem Substrat, gekennzeichnet durch die Verfahrensschritte
a. Beschichten eines Substrats mit einer Suspension aus einem oder mehreren Metalloxiden der Gruppe SiO₂, ZrO₂, Al₂O₃, Nb₂O₃, Ta₂O₃, CaO in einem organischen Suspensionsmittel,
b. Ganz oder teilweise Entfernung des organischen Suspensionsmittels unter Erhalt einer ersten Schicht.
c. Auftragen einer Dispersion aus TiO₂-Partikeln in einem organischen Dispersionsmittel auf die erste Schicht.
d. Ganz oder teilweise Entfernung des organischen Dispersionsmittel unter Erhalt einer zweiten Schicht.
e. Wärmebehandlung der ersten und zweiten Schicht bei 20 - 120 °C für 10 bis 300 sec,
mit der Maßgabe, dass die erste Schicht weitgehend keine TiO₂-Partikel enthält und mindestens 5 Gew.% ZrO₂ aufweist.

### Verfahrensschritt a

Die Suspension zur Herstellung der Unterschicht enthält bevorzugt SiO₂ in Form von Kieselsol, Kieselgel und/oder Kieselsäure, Organosilane wie Alkoxy- oder Alkoxyhydroxysilane, insbesondere Tetraalkoxysilane, ZrO₂ als Reinstoff und/oder in Form des Precursors Zirkoniumalkoxid, jeweils einzeln oder als Gemisch. Optional ist die Verwendung von weiteren Metalloxiden, wie z.B. Al₂O₃, ggf. in Form von mit Aluminiumoxid dotiertem SiO₂.

Die Suspension kann einen Feststoffgehalt von 1 bis 25 Gew.% aufweisen, wobei Feststoffgehalte von 1 bis 5 Gew.% zum Erhalt einer homogenen Schicht bevorzugt sind.

In einer besonderen Variante der Erfindung wird eine Suspension mit einem Feststoffgehalt von 1 bis 5 Gew.%, bestehend aus SiO₂ (oder einem entsprechendem Precursor) mit den Gewichtsanteilen 50, 75, 85, 90, 95 und ZrO₂ (oder einem entsprechendem Precursor) mit den entsprechenden Gewichtsanteilen 50, 25, 15, 10 und 5 eingesetzt. Der SiO₂-Anteil besteht wiederum bevorzugt aus einem Kieselsol mit einem Partikeldurchmesser von ca. 5 bis 50 nm und einem Organosilan als Precursor, bevorzugt Tetraalkoxysilan, in einem auf den SiO₂-Feststoff bezogenen Silan-/Kieselsolverhältnis von 50:50 bis 20:80 Gew.%. Der ZrO₂-Anteil wird bevorzugt in Form eines Zirkonium-Alkoxids, hier wiederum bevorzugt des Propanolats oder Butanolats eingesetzt.

Als organisches Suspensionsmittel eignen sich Alkohole wie Ethanol, Propanol, Isopropanol, Isobutanol, n-Butanol, Wasser, Ameisensäure, und/oder Essigsäure alleine oder als Gemisch, denen ein höher siedendes (zwischen 100 und 200 °C) Benetzungsmittel wie Alkylglykole oder Glycol hier insbesondere Ethylenglycol, Propylenglycol oder Butylenglycol alleine oder als Gemisch zugesetzt wird. Auch Alkohole wie Isopropanol oder n-Butanol sind als Benetzungsmittel geeignet. Zur Vermeidung von Fällungsreaktionen wird der pH-Wert der Suspension mit Ameisensäure oder Essigsäure auf ca. 3,5 eingestellt.

Das Benetzungsmittel ist insbesondere bei der Beschichtung der genannten Polymere erforderlich, um eine vollständige und porenfreie Bedeckung des Substrats mit der Suspension d.h. der Unterschicht bzw. Dispersion der Oberschicht zu ermöglichen. Der Anteil des Benetzungsmittels liegt bevorzugt bei 2 - 10 Gew.% der Dispersion bzw. Suspension. Das Benetzungsmittel kann zusätzlich ionische oder nicht-ionische Tenside enthalten; bezogen auf die Suspension/Dispersion haben sich Mengen von 0,01 % bis 0,5 Gew.% bewährt.

Die Suspension wird mit geeigneten Mitteln auf die Substratoberfläche aufgetragen. Dies kann durch Bestreichen oder Eintauchen erfolgen, als besonders effizient haben sich Sprühverfahren herausgestellt. Die Schichtdicke im nassen Zustand beträgt ca. 10 - 100 µm. Insbesondere bei Substraten mit komplexen Oberflächenstrukturen, wie z.B. Fensterprofilen haben sich Sprühtechniken, ggf. mit mehreren geometrisch verschieden angeordneten Sprühköpfen bewährt.

### Verfahrensschritt b

Die in Verfahrensschritt a) aufgetragene Unterschicht wird unter Erhalt einer nassfeuchten Schicht vorgetrocknet. Hierzu wird die Alkoholkomponente der Suspension ganz oder teilweise entfernt, wobei auf Grund der niedrigen Siedetemperatur bei Raumtemperatur praktisch keine weitere Wärmebehandlung erforderlich ist. Es ist lediglich für eine geeignete Absaugung der Alkoholdämpfe bzw. deren Wiedergewinnung Sorge zu tragen.

### Verfahrensschritt c

Die TiO₂-haltige Dispersion besteht bevorzugt aus den bereits genannten organischen Suspensionsmitteln (hier als Dispersionsmittel bezeichnet), Benetzungsmitteln und/oder Tensiden und weist bevorzugt einen Feststoffgehalt von ca. 0,1 bis 2,5 insbesondere 0,1 bis 1 Gew.% TiO₂-Partikel auf. Die TiO₂-Partikel werden bevorzugt in der kristallinen Anatas-Modifikation eingesetzt und weisen insbesondere einen Durchmesser von ca. 5 bis 10 nm auf.

Auch in diesem Verfahrensschritt haben sich die o.g. Sprüheinrichtungen bewährt. Die Auftragung der photokatalytisch aktiven Schicht auf die noch nassfeuchte Unterschicht hat so zu erfolgen, dass ein Festkleben der TiO₂-Partikel auf der Unterschicht erfolgt, jedoch keine Vermischung der Schichten stattfindet. Die Schichtdicke in nassem Zustand beträgt ca. 5 - 30 µm.

### Verfahrensschritt d

Dieser Verfahrensschritt entspricht Schritt c) bei der Herstellung der Unterschicht und wird bevorzugt bei Raumtemperatur unter Absaugung der Alkoholkomponente durchgeführt.

### Verfahrensschritt e

Anschließend erfolgt die Wärmebehandlung und damit Fixierung der Schichten bei Temperaturen von 20 bis 120°C, bevorzugt 20 bis 100°C, besonders bevorzugt 50 bis 80 °C. In Sonderfällen kann eine Wärmebehandlung bei 100 bis 120 °C angezeigt sein. Die Dauer der Wärmebehandlung hängt von der aufgebrachten Temperatur ab und kann bei niedrigen Temperaturen bis zu 300 sec. betragen. Bevorzugt ist eine Wärmebehandlung von ca. 30 bis 60 sec. Die Wärmebehandlung wird bevorzugt mit IR-Strahlern durchgeführt, da hier lediglich eine oberflächige Erwärmung des zu beschichteten Substrats erfolgt.

Die Verfahrensschritte a) bis e) können in einem kontinuierlichen Prozess in Anlehnung an Fig. 2 durchlaufen werden. Die Bezeichnungen A bis E in Fig. 2 entsprechen den Verfahrenschritten a) bis e); durch geeignete Transportbänder oder ähnliches ist es möglich, die Verfahrensschritte a) und c) bzw. b) und d) in jeweils einer gemeinsamen Einrichtung durchzuführen.

Die erfindungsgemäßen Beschichtungen bzw. das erfindungsgemäße Verfahren können insbesondere zur Beschichtung von Fensterprofilen, Türprofilen, Halterahmen für Werbetafeln, Rollladensegmenten, Fensterbänken, Architekturverblendungen, Türblättern, Regenrinnen oder Regenfallrohren verwendet werden.

Diese Objekte sind häufig aus PVC, mit oder ohne weiteren Polymeren, Füllstoffen oder Additiven hergestellt. Zweckmäßigerweise werden die Halbzeuge in gewohnter Weise hergestellt, z.B. Fenster- oder Türprofile durch Extrusion. Diese Halbzeuge werden anschließend erfindungsgemäß beschichtet und danach in gewohnter Weise zum fertigen Objekt (Fensterrahmen) montiert.

Bei der Anwendung im Fenster-/Türbau sei besonders auf die Offenbarung der DE 10 002 658 A1 hingewiesen. Hier wird ein Profilsystem zur Herstellung von Fenster- oder Türrahmen aus Kunststoff beschrieben, die mit Aluminiumschalen verkleidet sind. Diese Aluminiumschalen können mit Kunststoffüberzügen, hier insbesondere Pulverlacke auf Epoxid-, Polyester- oder PVC-Basis in nahezu beliebigen Farben beschichtet werden. Die mit Kunststoffen überzogenen Aluminiumschalen können ebenfalls erfindungsgemäß beschichtet werden. Ein weiterer Gegenstand der vorliegenden Erfindung sind daher lackierte oder unlackierte, optional mit den genannten Kunststoffen beschichtete Aluminiumschalen zur Verkleidung von Fenster- oder Türrahmen aus Kunststoff mit der oben beschriebenen photokatalytisch aktiven Beschichtung bzw. den beschriebenen Verfahren.

Die so photokatalytisch ausgerüsteten Materialen weisen eine stark hydrophile Oberfläche auf und sind besonders leicht zu reinigen. Sind diese Materialien im Außenbereich eingesetzt und Sonnenbestrahlung sowie Regenwasser ausgesetzt, tritt eine "Selbstreinigung" ein, da Schmutz durch die photokatalytisch aktive Oberfläche oxidativ angegriffen und von Regenwasser leicht abgespült werden kann.

### Ausführungsbeispiel 1

### Unterschicht

20,8 g Tetraethoxysilan, 1,2 g Zirkonbutanolat und 20 g Isopropanol werden unter Rühren mit 10,0 g 0,1 %iger Salzsäure versetzt und eine Stunde bei Raumtemperatur gerührt. Die klare Lösung wird anschließend mit 89,4 g Wasser verdünnt. Zum besseren Verlauf werden als Tensid 0,2 g Byk 348 zugesetzt.

### Oberschicht

10,0 g Titandioxid Disperal P25 (Degussa) und 0,1 g nichtionisches Tensid Genapol UD 050 werden in 90,0 g 1%iger Ameisensäure vorgelegt. Die Mischung wird 20 min bei 16.000 U/min mit einem Turrax dispergiert. Die weisse Suspension wird hiernach unter schnellem Rühren mit 900,0 g Wasser verdünnt, wobei man eine homogene milchige Lösung erhält.

### Ausführungsbeispiel 2

### Unterschicht

20,8 g Tetraethoxysilan, 1,2 g Zirkonbutanolat und 20 g Isopropanol werden unter Rühren mit 10,0 g 0,1%iger Salzsäure versetzt und eine Stunde bei Raumtemperatur gerührt. Die klare Lösung wird anschließend mit 89,4 g Isopropanol verdünnt.

### Oberschicht

28,4 g (0,10 mol) Titanisopropanolat werden in 170 g Isopropanol gelöst und unter Rühren mit 0,4 g 2M Salzsäure versetzt. Die Lösung wird eine Stunde bei Raumtemperatur gerührt. Danach wird 1%ige Essigsäure langsam unter schnellem Rühren zu der klaren Lösung gegossen und noch 30 min gelassen. Die Lösung wird danach in einen Autoklaven gefüllt, langsam auf 200°C erhitzt und 8 h bei dieser Temperatur gehalten. Danach wird langsam auf Raumtemperatur abkühlen gelassen.

### Beschichtung

Eine vorgefertigte Fensterprofilstange aus PVC der Firma KBE Profilsysteme GmbH wurde zunächst mit Isopropanol gereinigt und getrocknet. Anschließend wurde die Suspension der Unterschicht mit einer Nassfilm-Dicke von ca. 30 µm aufgesprüht und bei Raumtemperatur 30 sec. angetrocknet. Auf die Unterschicht wird die Dispersion der Oberschicht in einer Dicke von ca. 10 µm aufgenebelt. Das Aufsprühen der beiden Schichten erfolgte mit stationären Druckluft-Sprühpistolen, wobei die Profilstange mit einer konstanten Geschwindigkeit unter den Sprühpistolen durchgeführt wurde. Nach kurzem Abtrocknen der Oberschicht bei Raumtemperatur (ca. 30 sec.) erfolgt die thermische Vernetzung der Beschichtung bei ca. 80 °C für ca. 60 sec. mittels eines ca. 1 m langen, parallel zur Profilstange angebrachten IR-Strahlers. Auch hier wurde die Profilstange mit einer konstanten Geschwindigkeit unter dem Strahler durchgeführt, so dass jede Stelle der Oberfläche des Profils im Mittel auf die genannte Temperatur für den genannten Zeitraum erwärmt wurde.

Es wurde in beiden Fällen eine photokatalytisch aktive und kratzfeste Beschichtung der Profile erhalten.

## Patentansprüche

1. Photokatalytisch aktive Beschichtung eines Substrats aus mindestens zwei Schichten mit einer ersten Schicht auf dem Substrat, enthaltend ein oder mehrere Metalloxide der Gruppe SiO₂, ZrO₂, Al₂O₃, Nb₂O₃, Ta₂O₃, CaO und einer zweiten Schicht aus TiO₂-Partikeln, **dadurch gekennzeichnet, dass** die erste Schicht weitgehend keine TiO₂-Partikel enthält und mindestens 5 Gew.% ZrO₂ aufweist.

2. Photokatalytisch aktive Beschichtung nach Anspruch 1, **dadurch gekennzeichnet, dass** die erste Schicht 50 bis 95 Gew.% SiO₂ und 5 bis 50 Gew.% ZrO₂ enthält.

3. Photokatalytisch aktive Beschichtung nach Anspruch 1 oder 2, **dadurch gekennzeichnet, dass** die erste Schicht zusätzlich 0,01 bis 2 Gew.% mindestens eines weiteren Metalloxids enthält.

4. Photokatalytisch aktive Beschichtung nach einem der Ansprüche 1 bis 3, **dadurch gekennzeichnet, dass** als Substrat ein polymeres Material und/oder ein Metall eingesetzt wird.

5. Photokatalytisch aktive Beschichtung nach einem der Ansprüche 1 bis 4, **dadurch gekennzeichnet, dass** als Substrat ein oder mehrere Polymere ausgewählt aus der Gruppe PVC, PP, PE, PMMA, PS, PC, SBR jeweils als Homo- oder Copolymer oder als Polymerblend eingesetzt werden.

6. Verfahren zur Herstellung photokatalytisch aktiver Beschichtungen auf einem Substrat, **gekennzeichnet durch** die Verfahrensschritte
a. Beschichten eines Substrats mit einer Suspension aus einem oder mehreren Metalloxiden der Gruppe SiO₂, ZrO₂, Al₂O₃, Nb₂O₃, Ta₂O₃, CaO in einem organischen Suspensionsmittel,
b. Ganz oder teilweise Entfernung des organischen Suspensionsmittels unter Erhalt einer ersten Schicht.
c. Auftragen einer Dispersion aus TiO₂-Partikeln in einem organischen Dispersionsmittel auf die erste Schicht.
d. Ganz oder teilweise Entfernung des organischen Dispersionsmittel unter Erhalt einer zweiten Schicht.
e. Wärmebehandlung der ersten und zweiten Schicht bei 20 bis 120 °C für 10 bis 300 sec,
mit der Maßgabe, dass die erste Schicht weitgehend keine TiO₂-Partikel enthält und mindestens 5 Gew.% ZrO₂ enthält.

7. Verfahren nach Anspruch 6, **dadurch gekennzeichnet, dass** die zur Herstellung der ersten Schicht eingesetzten Suspension SiO₂, Kieselsol, Organosilane, ZrO₂, und/oder Zirkoniumalkoxide einzeln oder als Gemisch enthält.

8. Verfahren nach einem der Ansprüche 6 oder 7, **dadurch gekennzeichnet, dass** das organische Suspensions- und Dispersionsmittel Ethanol, Propanol, Isopropanol, Isobutanol, n-Butanol, Glycol, Ethylenglycol, Propylenglycol, Butylenglycol, Wasser, Ameisensäure, und/oder Essigsäure alleine oder als Gemisch enthält.

9. Verfahren nach einem der Ansprüche 6 bis 8, **dadurch gekennzeichnet, dass** als Substrat ein polymeres Material und/oder ein Metall eingesetzt wird.

10. Fensterprofile, Türprofile, Rollladensegmente, Fensterbänke, Architekturverblendungen, Türblätter, Regenrinnen, Regenfallrohre und/oder Aluminiumschalen zur Verblendung von Fenster- oder Türrahmen, mit einer Beschichtung gemäß einem der Ansprüche 1 bis 5.
